# EUROPÄISCHE PATENTSCHRIFT

(11) **EP 3 956 577 B1**
(45) Veröffentlichungstag und Bekanntmachung des Hinweises auf die Patenterteilung: **10.09.2025**
(21) Anmeldenummer: 20728031.4
(22) Anmeldetag: 25.05.2020
(51) Int. Cl.: F16C 33/58, F16C 19/38, F16C 19/50, B66C 23/84, F16C 19/26, F16C 19/36

(54) **WÄLZLAGER SOWIE MATERIALUMSCHLAGS- UND/ODER BAUMASCHINE MIT EINEM SOLCHEN WÄLZLAGER**
ROLLING BEARING AND MATERIAL TRANSFER- OR CONSTRUCTION MACHINE HAVING SUCH A ROLLING BEARING
PALIER À ROULEMENT ET MACHINE DE MANUTENTION DE MATÉRIAUX ET/OU ENGIN DE CHANTIER COMPORTANT UN TEL PALIER À ROULEMENT

(30) Priorität: 24.05.2019 DE 102019113897
(43) Veröffentlichungstag der Anmeldung: 23.02.2022
(73) Patentinhaber: Liebherr-Components Biberach GmbH, 88400 Biberach an der Riß (DE)
(72) Erfinder: ZELL, Robert, 88433 Schemmerhofen (DE); MALIK, Stefan, 88213 Ravensburg (DE)
(74) Vertreter: Thoma, Michael
(86) Internationale Anmeldenummer: PCT/EP2020/064450
(87) Internationale Veröffentlichungsnummer: WO 2020/239700

(56) Entgegenhaltungen:
- EP-A1- 3 312 414
- WO-A1-2007/082532
- WO-A1-2018/166661
- DE-A1- 102010 011 462
- DE-U1- 202015 006 588
- JP-A- 2013 137 074
- US-A- 4 592 667

## Beschreibung

Die vorliegende Erfindung betrifft ein Wälzlager mit zwei zueinander konzentrischen Laufringen, die zueinander drehbar durch zumindest eine Wälzkörperreihe aneinander abgestützt sind und Laufbahnen für die Wälzkörper der zumindest einen Wälzkörperreihe aufweisen, sowie eine Materialumschlags- und/oder Baumaschine wie beispielsweise Kran oder Seilbagger mit einem solchen Wälzlager.

Ein Wälzlager der genannten Gattung zeigt beispielsweise die Schrift WO 2018/166661 A1. Weitere Wälzlager mit korrigierten Laufbahnen zeigen die Schriften JP 2013 137074 A, WO 2007/082532 A1 und US 4 592 667 A. Auch die Schriften DE 10 2010 011 462 A1, EP 3 312 414 A1 und DE 20 2015 006 588 U1 zeigen ähnliche Wälzlager.

Bei Wälzlagern, die in größeren oder hochbelasteten Strukturen wie beispielsweise Kranen verbaut sind, treten neben Axial- und/oder Radialkräften oft auch hohe Biegemomente und Kippbelastungen auf, die auf die Lagerringe einwirken und zu Verwindungen und einem Winkelversatz der Laufringe zueinander führen können, sodass vorzeitiger Verschleiß im Bereich der Laufringe und Wälzkörper eintreten kann. Beispielsweise können mittenfreie Großwälzlager, die Maße von mehreren Metern im Durchmesser aufweisen können, an Kranen oder Seilbaggern eingesetzt werden, um beispielsweise den Abstützmast eines Schiffs- oder Hafenkrans oder den Ausleger eines Turmdrehkrans drehbar zu lagern und abzustützen. In ähnlicher Weise werden Wälzlager beispielsweise im Drehwerk eines Derrickkrans oder eines Teleskopauslegerkrans hohen Biegemomenten und Kippkräften beansprucht.

Die hierdurch entstehende Verwindungs- und Kippproblematik wird dabei noch verschärft, wenn die Mitte bzw. das Zentrum des Lagers auszusparen ist, um das abzustützende Bauteil wie beispielsweise den zuvor genannten Kranstützmast durch das Lager hindurchtreten zu lassen bzw. um am hindurchtretenden Teil einen Drehantrieb anbringen zu können. Die Lagerringe solcher mittenfreien Wälzlager können aus Platzgründen insbesondere in radialer Richtung nicht beliebig groß bauen, sodass die erreichbaren Flächenträgheitsmomente der Laufringe begrenzt sind.

Wälzlager der genannten Art zeigen beispielsweise die Schriften EP 20 92 204 B1 oder WO 2008/088213 A2.

Üblicherweise machen bei großen Materialumschlags- bzw. Baumaschinen der genannten Art die vertikalen Kran- bzw. Baumaschinenbelastungen und die entsprechenden Reaktionskräfte in dem Drehwerkslager immer noch einen großen bzw. beträchtlichen Teil der Wälzlagerbelastung aus, sodass üblicherweise das oder die Axiallager, die die vertikalen Lasten abfangen müssen, in Form eines tragkräftigen Zylinderrollen- oder Kegelrollenlagers ausgebildet sind, deren Zylinder- bzw. Kegelrollen eine relativ große Rollenbreite besitzen, um eine ausreichend große Berührungslinie zu haben und die Flächenpressungen erträglich zu halten. Andererseits reagieren solche breiten Rollenlager kritisch auf Verkippungen bzw. Schiefstellungen der Laufbahnen zueinander, da hier sehr rasch nur noch ein sehr kleiner Teil der Rollen tatsächlich trägt und eine hohe Kantenbelastung auftritt.

Kommt es bei solchen Rollenlagern zum sogenannten "Kantentragen", bei dem im Wesentlichen nur noch die Randbereiche der Zylinder- oder Kegelrollen tragen, tritt ein stark erhöhter Verschleiß an den Wälzkörpern und den Laufbahnen auf.

Es wurden insofern schon mehr- bzw. vielreihige Wälzlager mit komplexen Laufringstrukturen vorgeschlagen, die ineinander greifende Nasenringe und Nuten aufweisen können, die durch Axial- und Radiallagerreihen aneinander abgestützt sind, um ein Abheben der Laufbahnen bzw. übermäßige Verwindungen der Laufringe zu vermeiden.

Andererseits wurde auch bereits vorgeschlagen, die Laufbahnen in ihren Anstellwinkeln und/oder in ihrer Querschnittskontur so zu korrigieren, dass sie im belasteten Lagerzustand passend geneigt bzw. positioniert und/oder geformt sind und sich die Wälzkörper passend anschmiegen können. Insbesondere kann eine solche Laufbahnkorrektur eine leichte Schrägstellung bzw. Verkippung der Laufbahn oder eine leichte Verkrümmung der Laufbahn im Querschnitt umfassen, sodass die Laufbahn im unbelasteten Zustand an sich eine Fehlstellung bzw. eine Konturabweichung gegenüber der Umfangsfläche des Wälzkörpers aufweist. Wird das Wälzlager jedoch mit den bestimmungsgemäß auftretenden Kräften beaufschlagt, verwindet bzw. verformt sich die Laufbahn in eine Stellung bzw. Kontur, die dann zu den Wälzkörpern passt. Werden beispielsweise Zylinderrollen als Wälzkörper verwendet, kann eine solche Laufbahnkorrektur eine leichte Schrägstellung bzw. Neigung der Laufbahnen aufweisen, sodass die Laufbahnen, zwischen denen die Zylinderrollen laufen, im unbelasteten bzw. unverspannten Zustand nicht exakt parallel zueinander stehen. Alternativ oder zusätzlich zu einer solchen leichten Schrägstellung kann die Laufbahn auch leicht ballig oder leicht konkav im Querschnitt konturiert sein, sodass die Laufbahn erst durch die bestimmungsgemäß abzufangende Belastung sozusagen geradegezogen wird und eine ebene Laufbahnfläche ausbildet, auf der die Zylinderrollen satt aufliegen können.

Solche Laufbahnkorrekturen besitzen den Vorteil, dass keine komplexen Laufringstrukturen mit ineinander geschachtelten Nasenringen und Nuten benötigt werden - welche natürlich gleichwohl ergänzend vorgesehen sein können - und die Querschnitte der Laufringe kompakt bzw. kleingehalten werden können. Es wird nicht versucht, mit aller Macht Verwindungen der Laufringe zu verhindern, sondern versucht, solche Verwindungen zuzulassen bzw. nicht zu vermeidende Verwindungen durch Winkel- und/oder Formkorrekturen der Laufbahnen zu kompensieren.

Die Schrift WO 2018 / 16 66 61 A1 zeigt ein Wälzlager für eine Windkraftturbine, dessen Laufringe V-förmig angestellte Laufbahnen für die Wälzkörper haben. Dabei soll durch Bearbeitung in lokal harten Zonen Material abgenommen werden, um dort die Laufringdicke zu reduzieren im Vergleich zu einer Laufringdicke außerhalb der harten Zone.

Weitere Wälzlager der genannten Art sind beispielsweise aus den Schriften DE 20 2015 006 588 U1, EP 33 12 414 A1 und DE 10 2010 011 462 A1 bekannt.

Andererseits sind solche Laufbahnkorrekturen zumindest bislang wenig geeignet, ein sattes Aufliegen der Wälzkörper sicherzustellen, wenn sich die Laufringe nicht gleichmäßig verwinden bzw. abschnittsweise unterschiedlichen Belastungen, insbesondere Kippmomenten und Biegebelastungen unterliegen. Beispielsweise treten solche abschnittsweise unterschiedlichen Verformungen der Lagerringe auf, wenn die Anschlusskonstruktion an die Drehverbindung inhomogen steif ausgebildet ist. Bisweilen sind in der Anschlusskonstruktion bestimmte Bereiche auszusparen oder dünner als andere Bereiche auszubilden, um Platz für anzuschließende oder hindurchzuführende Maschinenkomponenten zu schaffen. Werden die von der Last her induzierten Biegemomente und Kippkräfte von der Anschlusskonstruktion nicht gleichmäßig in die Lagerringe des Wälzlagers eingeleitet, verformen sich die Lagerringe des Wälzlagers in unterschiedlichen Lagerringabschnitten unterschiedlich stark. Dies führt dazu, dass eine beispielsweise als Laufbahnkorrektur vorgesehene Schrägstellung der Laufbahn nicht mehr passt, wenn sich der Lagerring im Bereich einer Aussparung oder Schwächung der Anschlusskonstruktion aufgrund geringerer Biegebelastung nicht mehr passend verformt.

Der vorliegenden Erfindung liegt hiervon ausgehend die Aufgabe zugrunde, ein verbessertes Wälzlager sowie eine verbesserte Materialumschlags- und/oder Baumaschine jeweils der genannten Art zu schaffen, die Nachteile des Standes der Technik vermeiden und letzteren in vorteilhafter Weise weiterbilden. Insbesondere soll das genannte Kantentragen vermieden und ein verbessertes Tragverhalten unter Last mit einem satten Aufliegen der Wälzkörper und einer Linienberührung zwischen Laufbahn und Rollen im Wesentlichen über die gesamte Breite der Zylinder- oder Kegelrollen und damit eine geringere Beanspruchung der Laufbahnen auch dann erzielt werden, wenn aufgrund inhomogen steifer Anschlusskonstruktionen und/oder ungleichmäßig verteilter Lasten eine ungleichmäßige Lagerbelastung auftritt.

Erfindungsgemäß wird die genannte Aufgabe durch ein Wälzlager gemäß Anspruch 1 sowie eine Materialumschlags- und/oder Baumaschine gemäß Anspruch 12 gelöst. Bevorzugte Ausgestaltungen der Erfindung sind Gegenstand der abhängigen Ansprüche.

Es wird also vorgeschlagen, nicht mehr wie bislang eine über den Umfang gleichbleibende Laufbahnkorrektur vorzusehen, sondern die Laufbahnkorrektur über den Umfang der Laufringe zu variieren und gezielt an die bestimmungsgemäß zu erwartenden Lasten anzupassen. Erfindungsgemäß wird vorgeschlagen, in verschiedenen Winkelsektoren der Laufringe voneinander verschiedene Laufbahnkorrekturen vorzusehen und/oder die Laufbahnkorrektur nur in einem Bruchteil des Umfangs der Laufringe vorzusehen. Einer solchen auf einen Sektor beschränkten bzw. sektorweise verschiedenen bzw. über den Umfang nicht gleichbleibenden Laufbahnkorrektur liegt die Überlegung zugrunde, dass beispielsweise bei sehr inhomogenen Anschlusskonstruktionen mit unterschiedlichen Lastrichtungen wie beispielsweise einem wechselnden Kippmoment sehr unterschiedliche Verformungen der Laufringe auftreten können, sodass eine gleichmäßige Laufbahnkorrektur nur für einen bestimmten Bereich optimal ist, während in anderen Bereichen sich dieselbe Modifikation der Laufbahn gegenteilig auswirken und die Beanspruchung sogar erhöhen kann. Anstelle einer solchen gleichmäßigen, über den gesamten Umfang gleichbleibenden Laufbahnkorrektur wird gezielt eine winkelsektorweise unterschiedliche Anpassung der Laufbahnkorrektur an die maßgebliche Lastrichtung und/oder die gegebene Anschlusskonstruktion vorgenommen. Wird beispielsweise ein Winkelsektor eines Laufrings durch die Anschlusskonstruktion oder eine maßgebliche Lastrichtung stärker mit einem Biegemoment oder Kippkräften belastet, kann in diesem Sektor eine stärkere Laufbahnkorrektur vorgesehen werden als in einem schwächer belasteten Winkelsektor des Laufrings. **In** ähnlicher Weise können verschiedene Winkelsektoren mit unterschiedlichen Laufbahnkorrekturen versehen werden, wenn die beiden Winkelsektoren beim vorherrschenden Lastfall zwar der Höhe nach vergleichbare Biegemomente und Kippkräfte, im Vorzeichen jedoch entgegengesetzt wirkende Momente und Kräfte abzufangen haben.

Als Laufbahnkorrektur wird insbesondere eine Winkelkorrektur der Laufbahn vorgesehen, wobei eine Neigung der Laufbahn beispielsweise in einer radialen Querschnittsebene vorgesehen werden kann, die an sich nicht zur Ausrichtung der Umfangskontur der Wälzkörper passt, solange der Lagerring unbelastet bzw. unverspannt bleibt, jedoch sich dann an die Ausrichtung der Wälzkörperumfangsfläche anpasst, wenn der maßgebliche Lastfall eintritt. Werden beispielsweise zylindrische Wälzkörper verwendet, kann die Laufbahn mit einer leichten Neigung zu einer Ebene, die senkrecht auf die Rotationsachse steht, vorgesehen werden, wenn es sich um eine Axialwälzlagerreihe handelt. Bei Radiallagern kann eine Neigung zur Rotationsachse vorgesehen werden.

Werden Kegelrollen als Wälzkörper verwendet, kann die Laufbahn mit einer Neigung versehen sein, die im unbelasteten Zustand des Lagers leicht von der Neigung bzw. dem Kegelwinkel der Kegelrollen abweicht und sich im Lastfall an die Neigung der Flanken der Kegelrollen anpasst, so dass ein Kantentragen der Kegelrollen vermieden ist.

Zusätzlich zu einer solchen Winkelkorrektur umfasst die Laufbahnkorrektur aber auch eine Formkorrektur des Laufbahnquerschnitts. Beispielsweise kann die Laufbahn im Querschnitt betrachtet leicht ballig oder leicht konkav konturiert sein, wenn zylindrische oder kegelige Wälzkörper Verwendung finden. In ähnlicher Weise kann auch bei Verwendung von Tonnenwälzkörpern eine bogenförmige Krümmung vorgesehen werden, die von der Krümmung der Tonnenkörper abweicht, um im Lastfall bei entsprechender Verformung ein sattes Aufliegen der Wälzkörper zu erzielen.

In Weiterbildung der Erfindung kann beispielsweise in einem Winkelsektor einer Laufbahn eine leichte Winkelkorrektur und in einem anderen, davon abweichenden, beispielsweise gegenüberliegenden Winkelsektor eine stärkere Winkelkorrektur vorgesehen sein, wobei gegebenenfalls auch zwar vom Betrag her gleiche Neigungen, jedoch in unterschiedliche Richtungen bzw. mit unterschiedlichem Vorzeichen versehene Neigungskorrekturen vorgesehen werden können. Alternativ kann auch vorgesehen werden, dass nur ein begrenzter Winkelsektor einer Laufbahn mit einer Winkelkorrektur, das heißt einer bestimmten Neigung versehen wird, während die restliche Laufbahn ohne Winkelkorrektur ausgebildet wird, beispielsweise mit einer ebenen Laufbahn exakt parallel zu einer Ebene, die senkrecht auf die Rotationsachse steht, oder einer exakt zylindermantelförmigen Laufbahn.

**In** ähnlicher Weise kann in einem Winkelsektor der Laufbahn eine leicht bogenförmige Krümmung und in einem anderen, davon abweichenden, insbesondere gegenüberliegenden Winkelsektor eine stärkere Krümmung als Formkorrektur vorgesehen werden, wobei es ebenfalls möglich ist, nur in einem begrenzten Winkelsektor überhaupt eine Formkorrektur vorzusehen und den restlichen Laufbahnteil ohne Formkorrektur auszubilden.

**In** Weiterbildung der Erfindung können Winkel- und Formkorrekturen des Laufbahnquerschnitts auch miteinander kombiniert werden, wobei beispielsweise in einem Winkelsektor einer Laufbahn eine Winkelkorrektur vorgesehen werden kann und in einem anderen, davon abweichenden, insbesondere gegenüberliegenden Winkelsektor eine Formkorrektur beispielsweise in Form einer bogenförmigen Krümmung des Laufbahnquerschnitts vorgesehen sein kann.

Unabhängig vom Typ der Laufbahnkorrektur, das heißt Winkelkorrektur oder Formkorrektur kann es ausreichend sein, eine Laufbahnkorrektur nur an einem der beiden Lagerringe vorzusehen. Vorteilhafterweise kann die Laufbahnkorrektur an dem Laufring vorgesehen werden, der relativ zur Last steht, welche Last die zu kompensierenden Biegemomente und Kippkräfte und die daraus resultierenden Verwindungen erzeugt bzw. induziert oder beeinflusst. Wird das Wälzlager beispielsweise als Drehwerkslager eines Turmdrehkrans eingesetzt, kann die Laufbahnkorrektur an dem Laufring vorgesehen werden, der sich mit dem Ausleger des Turmdrehkrans mitdreht und somit relativ zur Last steht.

Alternativ oder zusätzlich kann aber auch der Laufring, der sich relativ zur Last verdreht, mit einer Laufbahnkorrektur versehen sein.

Alternativ oder zusätzlich zu einer Korrektur der Laufbahnen kann auch eine Wälzkörperkorrektur vorgesehen werden. Insbesondere wenn die Wälzkörper in einem geführten Käfig laufen, können über den Umfang des Käfigs variierend konturierte Wälzkörper Verwendung finden. Insbesondere können in einem Winkelsektor des Käfigs stärker kegelige Wälzkörper eingesetzt sein, während in einem anderen Winkelsektor des Käfigs weniger stark kegelige oder zylindrische Wälzkörper vorgesehen sein können. Beispielsweise kann ein solcher geführter Wälzkörperkäfig zwei gegenüberliegende Winkelsektoren besitzen, wobei in einem ersten der beiden Winkelsektoren Kegelrollen und in einem zweiten der Winkelsektoren Zylinderrollen oder abweichend kegelig konturierte Kegelrollen vorgesehen sind.

Vorteilhafterweise kann der genannte Käfig an dem Lagerring geführt sein und/oder sich mit dem Lagerring mitdrehen, der relativ zur Last stehend angeordnet ist. Alternativ wäre es aber auch möglich, die verschieden konturierten Wälzkörper in einem Käfig zu führen, der nicht relativ zur Last steht, sondern sich gegenüber der Last drehen kann.

Eine solche Wälzkörperkorrektur kann nicht nur in einer variierenden Kegeligkeit der Wälzkörper bzw. Kegelrollen einerseits und Zylinderrollen andererseits gegeben sein, sondern kann auch eine unterschiedliche Konturierung der Umfangskontur der Wälzkörper beinhalten, beispielsweise eine Kombination von Tonnenrollen und Zylinderrollen oder Tonnenrollen und Kegelrollen umfassen. Während in einem ersten Winkelsektor des Käfigs Tonnenrollen vorgesehen sind, können in einem anderen Winkelsektor Kegelrollen Verwendung finden.

Eine Wälzkörperkorrektur beispielsweise in Form unterschiedlicher Kegeligkeiten oder unterschiedlich ausgebildeter Umfangskonturen kann mit einer Laufbahnkorrektur kombiniert werden. Beispielsweise kann vorgesehen sein, dass in einem ersten Winkelsektor eines Laufrings dessen Laufbahn korrigiert, beispielsweise leicht schräg gestellt ist und die Laufbahn im Übrigen nicht korrigiert ist. Die an der genannten Laufbahn abrollenden Wälzkörper können in einem Käfig geführt sein, wobei in einem ersten Sektor des Käfigs Kegelrollen und in einem zweiten Winkelsektor des Käfigs Zylinderrollen vorgesehen sein können.

Alternativ oder zusätzlich zu solchen Laufbahn- bzw. Wälzkörperkorrekturen kann eine Korrektur auch im Bereich des Anschlusses des Wälzlagers an die Einbauumgebung vorgesehen sein. Insbesondere kann eine Anschlussfläche eines Laufrings und/oder eine Anschlussfläche der Anschlusskonstruktion, an der das Wälzlager befestigt ist, mit einer Korrektur ausgebildet sein, wobei eine solche Korrektur zwischen Wälzlager und Lagerkonstruktion insbesondere eine Winkelkorrektur, aber auch eine Formkorrektur umfassen kann. Insbesondere kann eine Anschlussfläche des Laufrings, mit der der Laufring an die Anschlusskonstruktion montiert wird, leicht geneigt oder angeschrägt sein, sodass durch das Verspannen des Laufrings an der Anschlusskonstruktion eine Korrektur im Bereich der Laufbahnen bzw. des Eingriffs zwischen Wälzkörpern und Laufbahnen impliziert wird.

Alternativ oder zusätzlich zu einer solchen Winkelkorrektur an einer Anschlussfläche eines Laufrings kann auch die Anschlussfläche der Anschlusskonstruktion winkelkorrigiert sein, beispielsweise leicht angeschrägt sein.

Wird beispielsweise ein Laufring mit seiner Stirnseite gegen eine gegenüberliegende Stirnseite der Anschlusskonstruktion gespannt, beispielsweise festgeschraubt, kann die Stirnseite des Laufrings und/oder die Stirnseite der Anschlusskonstruktion gegenüber einer Tangentialebene auf die Stirnseite leicht angeschrägt sein.

Eine solche Korrektur im Bereich der Anschlusskonstruktion bzw. des Übergangs zwischen Wälzlager und Anschlusskonstruktion kann vorteilhafterweise ebenfalls variabel über den Umfang des Wälzlagers ausgebildet sein, insbesondere in der vorgenannten Weise sektorweise begrenzt bzw. unterschiedlich ausgebildet sein. Beispielsweise kann die Anschlussfläche eines Laufrings in einem Winkelsektor des Laufrings leicht winkelkorrigiert und in einem gegenüberliegenden Winkelsektor in anderer Weise winkelkorrigiert sein, beispielsweise durch ein unterschiedliches Vorzeichen und/oder einen unterschiedlichen Betrag des Neigungswinkels.

Die über den Umfang des Wälzlagers variierende Laufbahnkorrektur und/oder über den Umfang variierende Wälzkörperkorrektur und/oder über den Umfang variierende Anschlusskorrektur kann hinsichtlich ihrer Verteilung über den Umfang bzw. Aufteilung auf verschiedene Winkelsektoren unterschiedlich gestaltet und an verschiedene Lastrichtungen und/oder Anschlusskonstruktionen angepasst sein. Wird das Wälzlager im Drehwerk einer Materialumschlags- und/oder Baumaschine verwendet, deren Lastmittel von einem Ausleger oder einem Tragarm abläuft, kann es vorteilhaft sein, wenn die Laufbahnkorrektur und/oder die Wälzkörperkorrektur über den Umfang des Wälzlagers zumindest näherungsweise symmetrisch zu einer Ebene ausgebildet ist, die sich aufrecht erstreckt und durch das Lastmittel und die Drehwerksachse geht. Üblicherweise hängt bei solchen Materialumschlags- und/oder Baumaschinen die vorherrschende Lastrichtung von der Drehstellung des Auslegers bzw. Tragarms ab, sodass die Laufbahnkorrektur an die Drehstellung des genannten Auslegers bzw. Tragarms angepasst und insbesondere symmetrisch hierzu verteilt sein kann.

Die Erfindung wird nachfolgend anhand bevorzugter Ausführungsbeispiele und zugehörigen Zeichnungen näher erläutert. **In** den Zeichnungen zeigen:

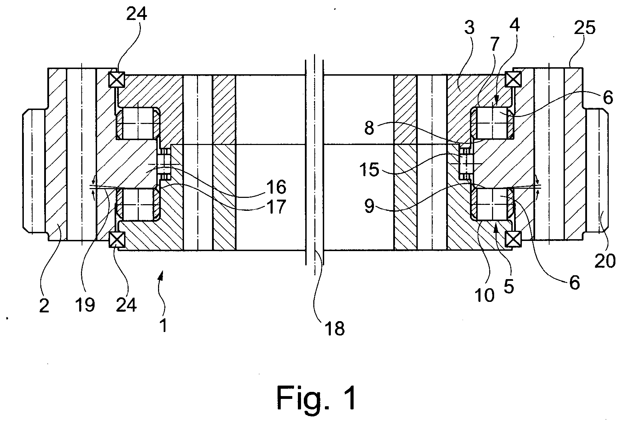

- Fig. 1:: eine Schnittansicht eines Wälzlagers nach einer vorteilhaften Ausführung der Erfindung, bei dem eine Laufbahn für eine Wälzkörperreihe mit einer Laufbahnkorrektur versehen ist, die in unterschiedlichen Winkelsektoren der Laufbahn unterschiedlich große Korrekturwinkel mit gleichem Vorzeichen besitzt,

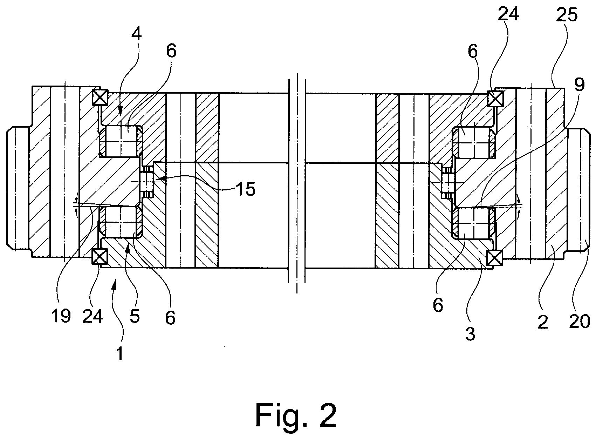

- Fig. 2:: eine Schnittansicht eines Wälzlagers nach einer weiteren vorteilhaften Ausführung der Erfindung, wobei eine Laufbahn für eine Wälzkörperreihe mit einer Laufbahnkorrektur versehen ist, die in verschiedenen Winkelsektoren der Laufbahn Korrekturwinkel unterschiedlicher Vorzeichen besitzt,

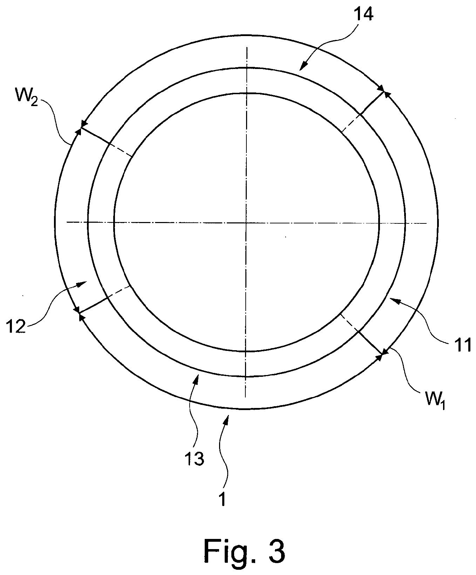

- Fig. 3:: eine schematische Draufsicht auf das Wälzlager aus Fig. 1 oder Fig. 2, wobei die Draufsicht die verschiedenen Winkelsektoren des Wälzlagers zeigt, in denen Laufbahnkorrekturen mit verschiedenen Korrekturwinkeln sowie die dazwischenliegenden Übergangsbereiche zeigt,

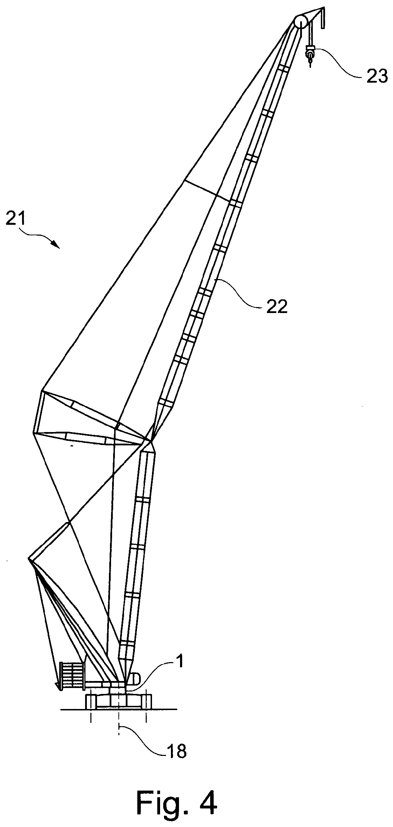

- Fig. 4:: eine schematische Seitenansicht einer Materialumschlags- und/oder Baumaschine in Form eines teleskopierbaren Mobilkrans, dessen Oberwagen mit daran angelenktem Ausleger durch ein Drehwerk auf einem Unterwagen um eine aufrechte Drehwerksachse drehbar abgestützt ist, welches Drehwerk ein Wälzlager aus den Figuren 1 bis 3 aufweist,

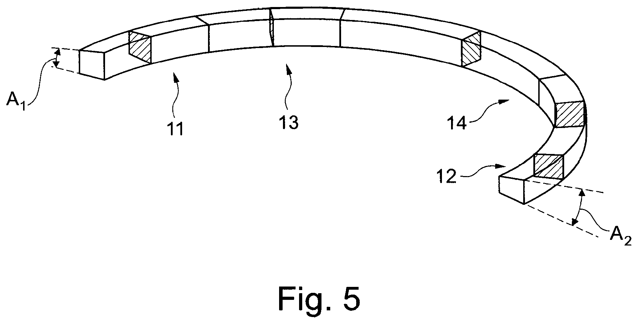

- Fig. 5:: eine perspektivische Darstellung einer Laufbahn eines Wälzlagers gemäß den Figuren 1 bis 3 mit einer variablen Laufbahnkorrektur in einer Halbschnitt-Darstellung, wobei die durch die variable Laufbahnkorrektur verschiedenen Querschnittskonturen in verschiedenen Sektoren dargestellt sind, und

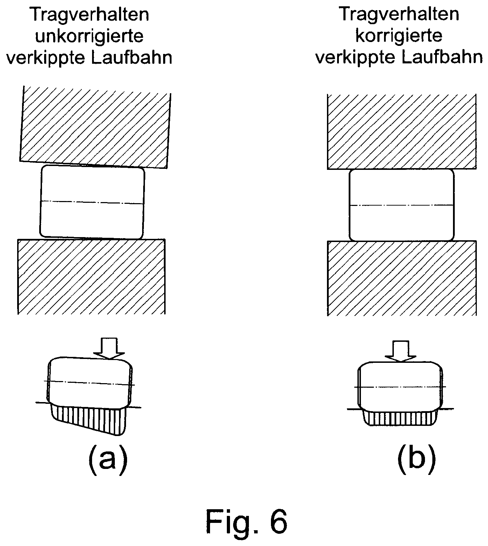

- Fig. 6:: eine vergleichende Darstellung des Tragverhaltens eines Lagers mit unkorrigierter Laufbahn und eines Lagers mit korrigierter Laufbahn, wobei die Teilansicht a das Kantentragen eines Rollenlagers mit verkippten, unkorrigierten Laufbahnen zeigt, und die Teilansicht b das harmonische Tragverhalten eines Rollenlagers über die vollen Rollenbreite mit verkippten, aber korrigierten Laufbahnen zeigt.

Wie die Figuren 1 und 2 zeigen, kann das Wälzlager 1 zwei zueinander konzentrische Laufringe 2 und 3 aufweisen und mittenfrei ausgebildet sein, wobei das genannte Wälzlager 1 ein Großwälzlager sein kann, welches beispielsweise als Drehwerkslager in einem Kran 21 oder einer anderen Materialumschlags- bzw. Baumaschine wie beispielsweise einem Seilbagger oder einem Schiffskran oder einem Hafenkran eingesetzt sein kann. Wie Figur 4 zeigt, kann das Wälzlager 1 beispielsweise einen Oberwagen eines Krans um eine aufrechte Drehwerksachse 18 auf einem Unterwagen abstützten, der selbstfahrend beispielsweise in Form eines LKWs ausgebildet sein kann. Auf dem Oberwagen kann ein Ausleger 22 abgestützt sein, von dem ein Lastaufnahmemittel 23 beispielsweise in Form eines Lasthakens abläuft und angehoben bzw. abgesenkt werden kann. Der genannte Ausleger 22 kann teleskopierbar und/oder wippbar sein und besitzt eine Ausladung, sodass das Lastaufnahmemittel und die daran angehängte Last sowie auch der Ausleger 22 selbst einen Hebelarm bezüglich des Wälzlagers 1 besitzt, der dazu führt, dass in das Drehlager 1 nicht nur vertikale Kräfte, sondern auch hohe Biegemomente eingeleitet werden.

Wie die Figuren 1 und 2 zeigen, können die Laufringe 2 und 3 durch mehrere Wälzkörperreihen gegeneinander drehbar abgestützt sein, wobei Axiallager und/oder Radiallager vorgesehen sein können. Beispielsweise können zwei Axiallagerreihen 4 und 5 und eine Radiallagerreihe 15 vorgesehen sein, um die beiden Laufringe 2 und 3 in axialer Richtung und in radialer Richtung gegeneinander abzustützen.

Beispielsweise können die Laufringe 2 und 3 mit einer Ring-Nut-Struktur ineinander greifen, wobei einer der Laufringe 2 eine radial vorspringende Nase 16 besitzen kann, die in eine Nut 17 in dem anderen Laufring 3 eingreifen kann. Die Wälzkörperreihen 4, 5 und 15 können in dem Spalt angeordnet sein, der zwischen der Nase 16 und der Nut 17 gebildet ist, wobei beispielsweise die Nase 16 durch zwei Axiallagerreihen 4 und 5 abgestützt sein kann, die auf gegenüberliegenden Seiten der Nase 16 angeordnet sind. Das Radiallager 15 kann an der Umfangsseite der Nase 16 angeordnet und/oder zwischen den Axiallagern 4 und 5 positioniert sein.

Die Wälzkörper 6 der Wälzkörperreihen 4, 5 und 15 können grundsätzlich unterschiedlich ausgebildet sein, wobei beispielsweise Zylinderrollen als Wälzkörper vorgesehen sein können. Grundsätzlich können aber auch andere Wälzkörperformen wie Kegelrollen oder Tonnenrollen oder gegebenenfalls auch Kugeln vorgesehen sein, wobei die verschiedenen Lagerreihen auch verschiedene Wälzkörperformen umfassen können. Wie die Figuren zeigen, können insbesondere sämtliche Lagerreihen Zylinderrollen umfassen.

Wie Figur 1 und Figur 2 zeigen, besitzen die Laufringe 2 und 3 Laufbahnen 7, 8, 9, 10 für die genannten Wälzkörperreihen 4 und 5, wobei auch für die zusätzliche Radialwälzlagerreihe 15 entsprechende Laufbahnen vorgesehen sind. Bei Verwendung von Zylinderrollen können die genannten Laufbahnen 7, 8, 9, und 10 im Wesentlichen eben ausgebildet sein, wobei als Laufbahnkorrektur aber auch leicht bogenförmige bzw. gekrümmte Laufbahn-Querschnittskonturen vorgesehen sein können. Die genannten Laufbahnen 7, 8, 9 und 10 erstrecken sich zumindest näherungsweise jeweils in einer Ebene, die senkrecht auf die Drehachse 18 des Wälzlagers 1 steht, wobei allerdings zumindest eine der Laufbahnen 9 eine Laufbahnkorrektur in Form einer Winkelkorrektur umfassen kann, sodass die Laufbahn 9 relativ zu der genannten Ebene 19 senkrecht zur Drehachse 18 leicht geneigt ist.

Dabei ist die genannte Laufbahnkorrektur nicht gleichmäßig über den gesamten Umfang ausgebildet, sondern verändert sich über den Umfang betrachtet.

Wie Figur 3 und Figur 5 zeigen, können sektorweise verschiedene oder keine Laufbahnkorrekturen vorgesehen sein. Beispielsweise kann die genannte, zumindest eine Laufbahn 9 in zwei einander gegenüberliegenden Winkelsektoren 11 und 12, die beispielsweise jeweils einen Winkel W1 bzw. W2 im Bereich von 20° bis 160° oder 40° bis 120° oder 60° bis 100° oder 70° bis 90° einschließen können, eine unterschiedliche Winkelkorrektur in Form jeweils eines Neigungswinkels A1 bzw. A2 umfassen, welche Neigungswinkel A1 und A2 hinsichtlich ihres Vorzeichens oder hinsichtlich ihres Betrags voneinander abweichen können.

Wie Figur 1 zeigt, können die Neigungswinkel A1 und A2 beispielsweise das gleiche Vorzeichen besitzen, sodass sich die Laufbahn 9 in beiden Winkelsektoren 11 und 12 zur selben Seite hin neigt, beispielsweise zur Lagerdrehachse 18 hin abfällt, wenn die in Figur 1 gezeigte, liegende Stellung des Wälzlagers 1 betrachtet wird. Dabei können die genannten Neigungswinkel A1 und A2 jedoch unterschiedlich groß ausgebildet sein, wobei die Korrekturwinkel A1 und A2 beide relativ klein sein können, beispielsweise kleiner als 2° oder kleiner als 1°, wobei grundsätzlich aber auch größere Neigungswinkel vorgesehen sein können, wenn der Lastfall dies erfordert. Die Abweichung der beiden Neigungswinkel A1 und A2 voneinander kann ebenfalls variieren, beispielsweise kann der eine Winkel um 0,1° oder 0,2° oder 0,3° oder 0,4° größer sein als der andere Neigungswinkel.

Alternativ oder zusätzlich zu einem betragsmäßigen Unterschied zwischen den beiden Neigungswinkeln A1 und A2 können die genannten Neigungswinkel aber auch unterschiedliche Vorzeichen besitzen, wie dies Figur 2 zeigt, sodass die Laufbahn 9 in den Winkelsektoren 11 und 12 zu verschiedenen Seiten hin geneigt ist. Beispielsweise kann die Laufbahn 9 im Winkelsektor 11 zur Lagerdrehachse 18 hin ansteigen, während die Laufbahn 9 im Winkelsektor 12 zur Lagerdrehachse 18 hin abfällt, wenn man die liegende Ausrichtung des Wälzlagers 1 gemäß Figur 2 betrachtet.

Wie Figur 5 zeigt, kann in einem Winkelsektor 11 die Laufbahn 9 zur Außenseite hin abfallend geneigt sein, während in einem anderen Winkelsektor 12 die Laufbahn 9 zur Lagerinnenseite hin abfallend geneigt sein kann. Dabei können die entsprechend vorgesehenen Neigungswinkel A1 und A2 betragsmäßig im Wesentlichen gleich groß oder betragsmäßig auch unterschiedlich groß bemessen sein, vgl. Figur 5.

Wie die Figuren 3 und 5 zeigen, können zwischen den beiden Winkelsektoren 11 und 12, in denen die genannten, voneinander verschiedenen Laufbahnkorrekturen vorgesehen sind, definierte Übergangsbereiche 13 und 14 vorgesehen sein, in welchen die Winkelkorrekturen aus den angrenzenden Winkelsektoren 11 und 12 sanft auslaufen und/oder sanft ineinander übergehen und/oder keine Winkelkorrekturen oder andere Laufbahnkorrekturen vorgesehen sind.

Die genannten Übergangsbereiche 13 und 14 können einander gegenüberliegend sein und den verbleibenden Winkelbereich ausfüllen, der zwischen den Winkelsektoren 11 und 12 der Laufbahnkorrektur verbleibt.

Insbesondere kann die Laufbahn 9 derart verkippt und/oder hinsichtlich ihrer Querschnittskontur derart korrigiert sein, dass die Rollen 6 die Laufbahn 9 im Wesentlichen über ihre ganze Breite berühren und/oder eine Linienberührung im Wesentlichen entlang der gesamten Breite der Rollen 6 stattfindet. Wie die vergleichende Darstellung der Figur 6 verdeutlicht, kommt es bei unkorrigierten Laufbahnen 9 zu einem Kantentragen, wenn sich die Lagerringe unter Last verformen bzw. verkippen. Die zylindrischen oder kegeligen Rollen 6 tragen nur noch entlang ihrer Kanten bzw. nimmt die Tragkraft zu einer Seite der Rolle hin stark ab, vgl. Figur 6a. Durch ein solches Kantentragen kommt es zu einem vorschnellen Verschleiß der Wälzkörper 6 und/oder der Laufbahnen 9.

Wird indes die Laufbahn 9 so korrigiert, dass unter Last und den dabei eintretenden Verformungen der Lagerringe die Rollen 6 zumindest näherungsweise gleichmäßig über ihre gesamte Breite belastet werden und ein linienförmiger Eingriff im Wesentlichen über die gesamte Rollenbreite erfolgt, wie dies Figur 6b zeigt, kann das genannte Kantentragen vermieden und der damit einhergehende Verschleiß verhindert werden.

Insbesondere kann die Laufbahn 6 in einer radialen Schnittebene betrachtet derart verkippt sein, dass die unter Last eintretende Verkippung des Lagerrings kompensiert wird und die Neigung der Laufbahn 6 unter Belastung der Neigung der tragenden Umfangsfläche der Rolle 6 entspricht. Werden beispielsweise zylindrische Rollen 6 als Wälzlager verwendet, kann die Laufbahn 6 derart korrigiert sein, dass unter Last und damit einhergehender Verformung des Lagerrings die Laufbahn 6 parallel zur Drehachse der Zylinderrolle und/oder parallel zu einer Ebene senkrecht zur Lagerdrehachse, wenn es sich um eine Axiallagerreihe handelt, erstreckt und/oder parallel zur Lagerdrehachse, wenn es sich um ein Radiallager handelt, erstreckt.

Der genannte Laufring 2, an welchem die korrigierte Laufbahn 9 vorgesehen ist, kann beispielsweise bei Einsatz als Drehwerkslager im Kran gemäß Figur 4 mit dem Oberwagen verbunden werden, sodass sich der Laufring 2 und damit die genannte, variable Laufbahnkorrektur mit dem Ausleger 22 mitdreht bzw. zur Last steht, sodass die Biegemomente von ihrer Richtung her definiert zur Laufbahnkorrektur wirken.

Wie die Figuren 1 und 2 zeigen, kann der genannte Laufring 2 eine Verzahnung 20 aufweisen, an der ein Drehantrieb beispielsweise in Form eines motorisch antreibbaren Ritzels angreifen kann, um den Laufring 2 rotatorisch anzutreiben.

Wie die Figuren 1 und 2 weiterhin zeigen, kann auch einer der Laufringe, insbesondere der Laufring 3 mit der zuvor beschriebenen Nut 17 geteilt ausgebildet sein.

Wie die Figuren weiterhin zeigen, kann der Lagerspalt, in dem die Wälzkörper 6 angeordnet sind, durch eine Dichtung 24 bzw. mehrere Dichtungen 24 abgedichtet sein.

Ist die Laufbahnkorrektur an dem zur Last stehenden Laufring ausgebildet, können die Winkelsektoren 11 und 12, in denen die Laufbahnkorrektur ausgebildet ist, beispielsweise symmetrisch zu einer Ebene angeordnet sein, die sich durch die Lagerdrehachse 18 und den Ausleger 22 des Krans 21 aufrecht erstreckt. Insbesondere kann sich die genannte aufrechte Ebene, die durch den Ausleger 22 geht, etwa mittig durch die genannten Winkelsektoren 11 und 12 erstrecken. Bei anderen Einsatzoptionen des Wälzlagers 1 können die genannten Winkelsektoren in entsprechender Weise symmetrisch bzw. etwa mittig zur Hauptlastebene und/oder zur Ebene der größten Biegebelastungen ausgerichtet sein.

Wie aus den Figuren hervorgeht, wird die Laufbahnmodifikation also nicht mehr konstant über 360° aufgebracht, sondern in unterschiedlichen Winkelbereichen variabel mit definierten Übergängen ausgebildet. In der Regel können zwei unterschiedliche Winkelbereiche für die Laufbahnkorrektur definiert werden, wobei es aber auch mehr als 2 unterschiedliche Bereiche geben kann. Ebenso ist es möglich, lediglich einen der genannten Winkelsektorenbereiche mit einer Laufbahnkorrektur vorzusehen.

Die Laufbahnmodifikation kann insbesondere eine Winkelkorrektur sein, das heißt die Laufbahn wird im Vergleich zum unkorrigierten Zustand leicht winkelig gefertigt. Der Korrekturwinkel kann in der Regel kleiner 1°, jedoch auch größer ausgebildet sein.

Die Korrektur kann auch mit anderen Konturen wie beispielsweise einer bogenförmigen Modifikation ausgeführt werden.

Die Laufbahnmodifikation kann in der beschriebenen Weise im zur Last stehenden Ring vorgesehen werden, kann aber auch im zur Last drehenden Ring sinnvoll sein. **In** beiden Fällen wird die Ausrichtung der korrigierten Winkelbereiche durch die Einbaulage in der gewünschten Weise vorgenommen.

Modifikationen können grundsätzlich an einer oder auch an beiden der an einen Wälzkörper angrenzenden Laufbahnen vorgesehen werden.

Unabhängig hiervon können Laufbahnkorrekturen an einer oder an mehreren Wälzkörperreihen durchgeführt werden.

Die Laufbahnkorrekturen können bei mehrteiligen Laufringen, wie beispielsweise der Laufring 3, auch in den Trennfugen der Ringe aufgebracht sein.

Alternativ oder zusätzlich könnte eine Modifikation auch in der Kontaktfläche des Wälzlagers 1 zur Anschlusskonstruktion vorgesehen werden, beispielsweise am Wälzlager 1 und/oder an der Anschlusskonstruktion. Beispielsweise könnte die Anschlussfläche 25, mit der der Laufring 2 an der Anschlusskonstruktion festgeschraubt wird, in ihrem Winkel leicht korrigiert sein, beispielsweise leicht geneigt sein, um eine entsprechende Korrektur im Eingriff zwischen Wälzkörpern 6 und Laufbahn zu erzeugen. Auch bei einer solchen Modifikation im Bereich der Kontaktfläche zwischen Wälzlager 1 und Anschlusskonstruktion kann die genannte Korrektur vorteilhafterweise variabel über den Umfang ausgebildet werden, beispielsweise nur in einem Winkelsektor 11 oder in verschiedenen Winkelsektoren 11 und 12 in verschiedener Weise, wie dies oben für die Laufbahnkorrektur beschrieben wurde.

Alternativ oder zusätzlich kann bei gefügten Käfigen auch eine Modifikation durch unterschiedlich kegelige Rollen realisiert werden, wie dies eingangs erläutert wurde.

## Patentansprüche

1. Wälzlager mit zwei zueinander konzentrischen Laufringen (2, 3), die zueinander drehbar durch zumindest eine Wälzkörperreihe (4, 5) aneinander abgestützt sind und Laufbahnen (7, 8; 9, 10) für die Wälzkörper (6) der zumindest einen Wälzkörperreihe (4, 5) aufweisen, wobei zumindest eine der Laufbahnen (7, 8; 9, 10) mit einer Laufbahnkorrektur zum Kompensieren von Laufringverwindungen unter Last versehen ist, wobei in verschiedenen Winkelsektoren der Laufringe (2, 3) voneinander verschiedene Laufbahnkorrekturen vorgesehen sind und/oder die Laufbahnkorrektur nur in einem Bruchteil des Umfangs der Laufringe vorgesehen ist, wobei die Laufbahnkorrektur eine Winkelkorrektur (A1, A2) eines Laufbahnquerschnitts umfasst und die Laufbahn im Vergleich zum unkorrigierten Zustand leicht winkelig gefertigt ist, wobei Rollen, insbesondere Zylinder- oder Kegelrollen, als Wälzkörper (6) vorgesehen sind,
**dadurch gekennzeichnet, dass**
zumindest eine der Laufbahnen (9), auf denen die Rollen abrollen, derart korrigiert ist, dass die Rollen zumindest näherungsweise über ihre gesamte Breite gleichmäßig belastet sind und sich zwischen den Laufbahnen und den Rollen eine Linienberührung über zumindest näherungsweise die gesamte Breite der Rollen einstellt, wobei zumindest eine der Laufbahnen, auf denen die Rollen abrollen, derart korrigiert ist, dass die Laufbahnen im Querschnitt betrachtet ebene Berührungslinien definieren, die bei zylindrischen Rollen parallel zueinander sind und bei kegeligen Rollen zueinander entsprechend dem Kegelwinkel der Kegelrollen geneigt sind.

2. Wälzlager nach dem vorhergehenden Anspruch, wobei verschiedene Laufbahnabschnitte in verschiedenen Winkelsektoren (11, 12) der Laufringe (2, 3) verschiedene Laufbahnneigungen aufweisen.

3. Wälzlager nach einem der vorhergehenden Ansprüche, wobei verschiedene Laufbahnabschnitte in verschiedenen Winkelsektoren (11, 12) der Laufringe (2, 3) verschiedene Laufbahnkonturen besitzen, insbesondere verschieden stark bogenförmig gekrümmt sind.

4. Wälzlager nach einem der vorhergehenden Ansprüche, wobei beide Laufringe (2, 3) jeweils mit einer Laufbahnkorrektur versehen sind, insbesondere jeweils in verschiedenen Winkelsektoren verschiedene Laufbahnkorrekturen besitzen.

5. Wälzlager nach einem der Ansprüche 1 bis 3, wobei nur einer der Laufringe (2, 3) mit einer Laufbahnkorrektur versehen ist.

6. Wälzlager nach einem der vorhergehenden Ansprüche, wobei die über den Umfang variierende Laufbahnkorrektur an dem relativ zur Last stehenden Laufring (2) vorgesehen ist.

7. Wälzlager nach einem der vorhergehenden Ansprüche, wobei die über den Umfang variierende Laufbahnkorrektur an dem relativ zur Last drehenden Laufring (3) vorgesehen ist.

8. Wälzlager nach einem der vorhergehenden Ansprüche, wobei in zwei einander gegenüberliegenden Winkelsektoren (11, 12) voneinander verschiedene Winkelkorrekturen vorgesehen sind und zwischen den genannten, gegenüberliegenden Winkelsektoren (11, 12) jeweils ein Übergangsbereich (13, 14) vorgesehen ist, in welchem die eine Laufbahnkorrektur kontinuierlich in die andere Laufbahnkorrektur übergeht und/oder keine Laufbahnkorrektur vorgesehen ist.

9. Wälzlager nach einem der vorhergehenden Ansprüche, wobei die Laufbahnkorrektur eine Formkorrektur eines Laufbahnquerschnitts umfasst.

10. Wälzlager mit zwei konzentrischen Laufringen (2, 3), die zueinander drehbar durch zumindest eine Wälzkörperreihe (4, 5) abgestützt sind und Laufbahnen (7, 8; 9, 10) für die Wälzkörper (6) der zumindest einen Wälzkörperreihe (4, 5) aufweisen, wobei die Wälzkörper durch einen geführten Wälzkörperkäfig geführt sind, **dadurch gekennzeichnet, dass** in verschiedenen Winkelsektoren des Wälzkörperkäfigs voneinander verschieden kegelig ausgebildete Wälzkörper (6) angeordnet sind und/oder in einem Winkelsektor des Wälzkörperkäfigs nur kegelige Wälzkörper und in einem anderen Winkelsektor nur zylindrische Wälzkörper vorgesehen sind.

11. Wälzlager nach dem vorhergehenden Anspruch, wobei zusätzlich zu den unterschiedlich kegeligen Wälzkörpern (6) zumindest eine der Laufbahnen (7, 8; 9, 10) mit einer Laufbahnkorrektur in Form einer Winkelkorrektur und/oder einer Formkorrektur eines Laufbahnquerschnitts versehen ist.

12. Materialumschlags- und/oder Baumaschine, insbesondere in Form eines Krans (21) oder eines Seilbaggers, mit einem Lastaufnahmemittel (23), das von einem Ausleger (22) oder einem Tragarm abläuft, sowie einem Drehwerk zum Verdrehen des Auslegers oder Tragarms um eine aufrechte Drehwerksachse, wobei das genannte Drehwerk ein Wälzlager (1), das gemäß einem der vorhergehenden Ansprüche ausgebildet ist, aufweist.

13. Materialumschlags- und/oder Baumaschine nach dem vorhergehenden Anspruch, wobei die über den Umfang des Wälzlagers (1) variierende Laufbahnkorrektur und/oder über den Umfang variierende Kegeligkeit der Wälzkörper (6) symmetrisch bezüglich einer aufrechten Ebene ausgebildet ist, die durch die Drehwerksachse und das Lastaufnahmemittel geht, wobei die Laufbahnkorrektur an dem Laufring (2) vorgesehen ist, der zusammen mit dem Ausleger (22) oder Tragarm um die aufrechte Drehwerksachse verdrehbar ist, wobei eine mit dem Wälzlager (1) verbundene Anschlusskonstruktion eine Anschlussfläche besitzt, an der einer der Laufringe (2) des Wälzlagers (1) befestigt ist, wobei die genannte Anschlussfläche der Anschlusskonstruktion in verschiedenen Winkelsektoren (11, 12) mit voneinander verschiedenen Anschlusskorrekturen, insbesondere verschiedenen Winkelkorrekturen, versehen ist und/oder die Anschlusskorrektur der Anschlussfläche nur in einem Bruchteil des Umfangs der Anschlusskonstruktion vorgesehen ist.

## Claims

1. Rolling bearing having two bearing rings (2, 3) which are concentric with one another, are supported on one another rotatably with respect to each other by means of at least one row of rolling elements (4, 5) and have bearing races (7, 8; 9, 10) for the rolling elements (6) of the at least one row of rolling elements (4, 5), wherein at least one of the bearing races (7, 8; 9, 10) is provided with a bearing race correction for compensating for torsions of the bearing ring under load, **characterized in that** different bearing race corrections are provided in different angular sectors of the bearing rings (2, 3) and/or the bearing race correction is provided only in a fraction of the circumference of the bearing rings, wherein the bearing race correction comprises an angular correction (A1, A2) of a bearing race cross-.section and the bearing race is formed to be slightly inclined when compared to the uncorrected state, wherein rollers, in particular cylindrical or tapered rollers, are provided as rolling elements (6),
**characterized in that**
at least one of the bearing races (9) on which the rollers roll is corrected in such a way that the rollers are uniformly loaded at least approximately over their entire width and a line contact is established between the bearing races and the rollers over at least approximately the entire width of the rollers, wherein at least one of the bearing races on which the rollers roll is corrected in such a way that, viewed in cross-section, the bearing races define plane contact lines which, in the case of cylindrical rollers, are parallel to one another and, in the case of tapered rollers, are inclined relative to one another in accordance with the taper angle of the tapered rollers.

2. Rolling bearing according to the preceding claim, wherein different bearing race sections in different angular sectors (11, 12) of the bearing rings (2, 3) have different bearing race inclinations.

3. Rolling bearing according to any of the preceding claims, wherein different bearing race sections in different angular sectors (11, 12) of the bearing rings (2, 3) have different bearing race contours, in particular are curved to different degrees in an arc-shaped manner.

4. Rolling bearing according to any of the preceding claims, wherein both bearing rings (2, 3) are each provided with a bearing race correction, in particular each have different bearing race corrections in different angular sectors.

5. Rolling bearing according to any one of claims 1 to 4, wherein only one of the bearing rings (2, 3) is provided with a bearing race correction.

6. Rolling bearing according to any of the preceding claims, wherein the circumferentially varying bearing race correction is provided on the bearing ring (2) relative to the load.

7. Rolling bearing according to any of the preceding claims, wherein the circumferentially varying bearing race correction is provided on the bearing ring (3) relative to the load.

8. Rolling bearing according to any of the preceding claims, wherein angular corrections which differ from one another are provided in two mutually opposite angular sectors (11, 12) and a transition region (13, 14) is provided in each case between said opposite angular sectors (11, 12), in which transition region (13, 14) the one bearing race correction merges continuously into the other bearing race correction and/or no bearing race correction is provided.

9. Rolling bearing according to any one of the preceding claims, wherein the bearing race correction includes a shape correction of a bearing race cross-section.

10. Rolling bearing having two concentric bearing rings (2, 3) which are rotatably supported with respect to each other by means of at least one row of rolling elements (4, 5) and have bearing races (7, 8; 9, 10) for the rolling elements (6) of the at least one row of rolling elements (4, 5), wherein the rolling elements are guided by a guided rolling element cage, **characterized in that** rolling elements (6) of different conical shapes are arranged in different angular sectors of the rolling element cage and/or only conical rolling elements are provided in one angular sector of the rolling element cage and only cylindrical rolling elements are provided in another angular sector.

11. Rolling bearing according to the preceding claim, wherein, in addition to the differently tapered rolling elements (6), at least one of the bearing races (7, 8; 9, 10) is provided with a bearing race correction in the form of an angle correction and/or a shape correction of a bearing race cross-section.

12. Material transfer- or construction machine, in particular in the form of a crane (21) or a cable excavator, comprising a load-receiving means (23) extending from a boom (22) or a support arm, and a slewing gear for rotating the boom or support arm about an upright slewing gear axis, said slewing gear comprising a rolling bearing (1) formed according to any one of the preceding claims.

13. Material transfer- or construction machine according to the preceding claim, wherein the bearing race correction varying over the circumference of the rolling bearing (1) and/or taper varying over the circumference of the rolling elements (6) is formed symmetrically with respect to an upright plane passing through the slewing gear axis and the load-receiving means, wherein the bearing race correction is provided on the bearing ring (2) which is rotatable together with the boom (22) or support arm about the upright rotation axis, wherein an adjacent structure connected to the rolling bearing (1) has an adjacent surface to which one of the bearing rings (2) of the rolling bearing (1) is fixed, wherein said adjacent surface of the adjacent structure is provided in different angular sectors (11, 12) with mutually different adjacent corrections, in particular different angular corrections, and/or the adjacent correction of the adjacent surface is provided only in a fraction of the circumference of the adjacent structure.

## Revendications

1. Palier à roulement avec deux bagues de roulement (2, 3) concentriques l'une à l'autre, qui sont supportées l'une par rapport à l'autre de manière rotative par au moins une rangée de corps de roulement (4, 5) et qui présentent des chemins de roulement (7, 8 ; 9, 10) pour les corps de roulement (6) de l'au moins une rangée de corps de roulement (4, 5), au moins un des chemins de roulement (7, 8 ; 9, 10) étant pourvu d'une correction de chemin de roulement pour compenser les torsions de la bague de roulement sous charge, des corrections de chemin de roulement différentes les unes des autres étant prévues dans différents secteurs angulaires des bagues de roulement (2, 3) et/ou la correction de chemin de roulement n'étant prévue que dans une fraction de la circonférence des bagues de roulement, la correction de chemin de roulement comprenant une correction angulaire (A1, A2) d'une section transversale de chemin de roulement et le chemin de roulement étant usiné avec un léger angle en comparaison de l'état non corrigé, des galets, notamment des galets cylindriques ou coniques, étant prévus en tant que corps de roulement (6),
**caractérisé en ce que**
au moins l'un des chemins de roulement (9) sur lesquels roulent les galets est corrigé de telle sorte que les galets sont chargés de manière uniforme au moins approximativement sur toute leur largeur et qu'il s'établit entre les chemins de roulement et les galets un contact linéaire sur au moins approximativement toute la largeur des galets, au moins l'un des chemins de roulement sur lesquels roulent les galets étant corrigé de telle sorte que les chemins de roulement, considérés en coupe transversale, définissent des lignes de contact planes qui, dans le cas de galets cylindriques, sont parallèles entre elles et, dans le cas de galets coniques, sont inclinées entre elles en fonction de l'angle de conicité des galets coniques.

2. Palier à roulement selon la revendication précédente, dans lequel différentes sections de chemins de roulement présentent différentes inclinaisons de chemins de roulement dans différents secteurs angulaires (1 1, 12) des bagues de roulement (2, 3).

3. Palier à roulement selon l'une quelconque des revendications précédentes, dans lequel différentes sections de chemin de roulement dans différents secteurs angulaires (11, 12) des bagues de roulement (2, 3) possèdent différents contours de chemin de roulement, notamment sont courbées en forme d'arc à différents degrés.

4. Palier à roulement selon l'une quelconque des revendications précédentes, dans lequel les deux bagues de roulement (2, 3) sont pourvues chacune d'une correction de chemin de roulement, notamment possèdent chacune des corrections de chemin de roulement différentes dans différents secteurs angulaires.

5. Palier à roulement selon l'une quelconque des revendications 1 à 3, dans lequel une seule des bagues de roulement (2, 3) est pourvue d'une correction de chemin de roulement.

6. Palier à roulement selon l'une quelconque des revendications précédentes, dans lequel la correction de chemin de roulement variant sur la circonférence est prévue sur la bague de roulement (2) stationnaire par rapport à la charge.

7. Palier à roulement selon l'une quelconque des revendications précédentes, dans lequel la correction de chemin de roulement variant sur la circonférence est prévue sur la bague de roulement (3) en rotation par rapport à la charge.

8. Palier à roulement selon l'une quelconque des revendications précédentes, dans lequel des corrections angulaires différentes les unes des autres sont prévues dans deux secteurs angulaires (11, 12) opposés l'un à l'autre et une zone de transition (13, 14) est respectivement prévue entre lesdits secteurs angulaires (11, 12) opposés, dans laquelle l'une des corrections de chemin de roulement se transforme en continu en l'autre correction de chemin de roulement et/ou aucune correction de chemin de roulement n'est prévue.

9. Palier à roulement selon l'une quelconque des revendications précédentes, dans lequel la correction de chemin de roulement comprend une correction de forme d'une section transversale de chemin de roulement.

10. Palier à roulement avec deux bagues de roulement concentriques (2, 3), qui sont supportées l'une par rapport à l'autre de manière rotative par au moins une rangée de corps de roulement (4, 5) et présentent des chemins de roulement (7, 8 ; 9, 10) pour les corps de roulement (6) de l'au moins une rangée de corps de roulement (4, 5), les corps de roulement étant guidés par une cage de corps de roulement guidée, **caractérisé en ce que** dans différents secteurs angulaires de la cage de corps de roulement sont agencés des corps de roulement (6) réalisés sous forme conique différente les uns des autres et/ou dans un secteur angulaire de la cage de corps de roulement ne sont prévus que des corps de roulement coniques et dans un autre secteur angulaire que des corps de roulement cylindriques.

11. Palier à roulement selon la revendication précédente, dans lequel, en plus des corps de roulement coniques différents (6), au moins l'un des chemins de roulement (7, 8 ; 9, 10) est pourvu d'une correction de chemin de roulement sous la forme d'une correction angulaire et/ou d'une correction de forme d'une section transversale de chemin de roulement.

12. Machine de manutention de matériaux et/ou de construction, notamment sous la forme d'une grue (21) ou d'une excavatrice à câble, avec un moyen de réception de charge (23) qui se déroule à partir d'une flèche (22) ou d'un bras porteur, ainsi qu'un mécanisme de rotation pour faire tourner la flèche ou le bras porteur autour d'un axe de mécanisme de rotation vertical, ledit mécanisme de rotation comprenant un palier à roulement (1) qui est réalisé selon l'une quelconque des revendications précédentes.

13. Machine de manutention de matériaux et/ou de construction selon la revendication précédente, dans laquelle la correction de chemin de roulement qui varie sur la circonférence du palier à roulement (1) et/ou la conicité qui varie sur la circonférence des corps de roulement (6) sont réalisées symétriques par rapport à un plan vertical passant par l'axe de mécanisme de rotation et le moyen de réception de charge, la correction de chemin de roulement étant prévue sur la bague de roulement (2) qui peut tourner conjointement avec la flèche (22) ou le bras porteur autour de l'axe de mécanisme de rotation vertical, une construction de raccordement reliée au palier à roulement (1) possédant une surface de raccordement à laquelle est fixée l'une des bagues de roulement (2) du palier à roulement (1), ladite surface de raccordement de la construction de raccordement étant pourvue, dans différents secteurs angulaires (11, 12), de différentes corrections de raccordement, notamment de différentes corrections angulaires, et/ou la correction de raccordement de la surface de raccordement n'étant prévue que dans une fraction de la circonférence de la construction de raccordement.
